# EUROPÄISCHE PATENTSCHRIFT

(11) **EP 1 612 141 B1**
(45) Veröffentlichungstag und Bekanntmachung des Hinweises auf die Patenterteilung: **31.12.2014**
(21) Anmeldenummer: 05006508.5
(22) Anmeldetag: 24.03.2005
(51) Int. Cl.: B64G 1/64

(54) **Vorrichtung zur lösbaren Halterung von Bauteilen**
Device for the releasable holding of parts
Dispositif pour la rétention libérable de pièces

(30) Priorität: 01.07.2004 DE 102004031861
(43) Veröffentlichungstag der Anmeldung: 04.01.2006
(73) Patentinhaber: Astrium GmbH, 85521 Ottobrunn (DE)
(72) Erfinder: Retat, Ingo, Dr., 28832 Achim (DE); Klotz, Barbara, 28816 Stuhr (DE); Wendorff, Jens, Dr., 28879 Grasberg (DE); Höni, Oliver, 71083 Herrenberg (DE)
(74) Vertreter: Marschall, Stefan

(56) Entgegenhaltungen:
- EP-A- 0 121 959
- EP-A- 0 716 982
- EP-A- 1 426 291
- GB-A- 1 011 680
- US-A- 2 920 570
- US-A- 4 430 552
- US-A- 5 046 426
- US-A1- 2002 080 547
- US-B1- 6 404 322
- US-B1- 6 439 122
- STAMP J: "The Rube Goldberg Device"[Online] 10. Dezember 1997 (1997-12-10), XP002349365 Gefunden im Internet: URL:http://www.hanover.edu/physics/rube/ru be.htm> [gefunden am 2005-10-14]
- LUCY M ET AL: "REPORT ON ALTERNATIVE DEVICES TO PYROTECHNICS ON SPACECRAFT" AIAA/USU CONFERENCE ON SMALL SATELLITES, September 1996 (1996-09), Seiten 1-20, XP000952209
- VIELEERS A M V ED - INSTITUTE OF ELECTRICAL AND ELECTRONICS ENGINEERS: "A NEW GENERIC RANGE OF ADVANCED RIGID SOLAR ARRAYS FOR SPACE APPLICATIONS" PHOTOVOLTAIC SPECIALISTS CONFERENCE. KISSIMMEE, MAY 1 - 4, 1984, NEW YORK, IEEE, US, Bd. VOL. 1 CONF. 17, 1. Mai 1984 (1984-05-01), Seiten 310-314, XP000129258

## Beschreibung

Die Erfindung betrifft eine Vorrichtung zur lösbaren Halterung von zwei Bauteilen in Form struktureller Elemente für einen Raumfahrteinsatz mit wenigstens einem die Bauteile verbindenden Halteelement gemäß dem Oberbegriff des Anspruchs 1.

In der Raumfahrt werden häufig Vorrichtungen verwendet, mittels derer strukturelle Elemente zunächst miteinander verbunden und zu einem späteren Zeitpunkt, beispielsweise nach Erreichen einer vorgegebenen Position im All, voneinander getrennt werden können, ohne daß ein erneutes Wiederherstellen der Verbindung zu einem späteren Zeitpunkt vorgesehen ist. Typische Beispiele für derartige Anwendungsfälle sind das Entfalten von Solargeneratoren im Orbit und die Abtrennung von Raketenstufen. Für diese Aufgaben werden üblicherweise keine motorischen Antriebe genutzt, da für eine einmalige Trennung der konstruktive Aufwand, der erforderlich wäre, um eine hohe Zuverlässigkeit zu erreichen, zu groß wäre. Statt dessen werden in der Regel Haltevorrichtungen eingesetzt, die durch die Kraft explosiver Ladungen gelöst werden. Beispiele hierfür sind explosive Muttern, Bolzenschneider oder Klemmbänder. Diese Vorrichtungen weisen eine geringe Baugröße auf und lassen sich einfach in ein vorhandenes System integrieren. Zudem besitzen diese bekannten Vorrichtungen in der Regel eine zuverlässige Funktionsweise.

Bei der Zündung der explosiven Ladungen zur Trennung derartiger Vorrichtungen können aber auch Schockbelastungen auftreten, die sensible Bauteile zerstören können. Die Handhabung der explosive Teile und auch die - in einigen Fällen - bei der Auslösung entstehen Fragmente können zudem sicherheitskritisch sein. Der Gebrauch der bekannten lösbaren Haltevorrichtungen bedarf daher besonderer Vorsicht, eine Nutzung im Inneren eines bemannten Raumfahrzeuges ist aufgrund der entstehenden Gase und der möglicherweise freigesetzten Fragmente von vornherein ausgeschlossen.

Daher sind bereits diverse Vorrichtungen in Gebrauch, die eine ungefährliche Trennung der durch die Vorrichtung zunächst miteinander verbundenen Komponenten dadurch ermöglichen, daß die Halterung über wenigstens ein mittels Wärmezufuhr zerstörbares Halteelement, insbesondere über wenigstens einen Faden, erfolgt. Das Durchschmelzen der eines aus mehreren Fäden bestehenden Bündels unter Wärmeeinfluß, wie es beispielsweise bei der aus EP 0 716 982 A bekannt gewordenen Anordnung der eingangs genannten Art vorgesehen ist, bewirkt, daß eine vorhandene strukturelle Verbindung getrennt wird. Auf diese Weise lassen sich kleine, einfache und sicher zu handhabende lösbare Haltevorrichtungen aufbauen.

Abweichend von anderen bekannten Anordnungen, wie sie beispielsweise in der US 4,430, 552 A, der US 6,439,122 B1, der US 2002/080547 A1 und der EP 0 121 959 A1 beschrieben sind und bei denen ebenfalls eine Separation von Komponenten durch das Aufschmelzen eines lasttragenden Fadens herbeigeführt wird, ist bei der den Oberbegriff bildenden Anordnung gemäß der EP 0 716 982 A vorgesehen, daß der lasttragende Faden mehrfach um die zu lösende Trennstelle herum gewickelt ist, um so mehr Kraft aufnehmen zu können.

Aufgabe der Erfindung ist es, eine Vorrichtung der eingangs genannten Art derart auszubilden, daß sie bei einem möglichst einfachen Aufbau ein Höchstmaß an Zuverlässigkeit aufweist.

Diese Aufgabe wird erfindungsgemäß mit einer Vorrichtung gemäß Anspruch 1 gelöst.

Auf diese Weise wird eine hohe Redundanz erreicht. Sollte eine der beiden Heizvorrichtungen versagen, so wird die zweite Heizvorrichtung aktiviert, wodurch ebenfalls eine zuverlässige Trennung erfolgt. Werden beide Heizvorrichtungen gleichzeitig aktiviert, so ist darüber hinaus durch das Halteelement nach der Erfindung eine sehr schnelle, redundante Trennung möglich.

Das Material der für das erfindungsgemäße Halteelement verwendeten Fasern kann synthetisch hergestellt sein und wird in weiterer Ausgestaltung der Erfindung entsprechend den jeweiligen Einsatzbedingungen, insbesondere im Hinblick auf die erforderliche Reißfestigkeit und den optimalen Temperaturbereich, angepaßt ausgewählt.

Bei einer besonders bevorzugten Ausführungsform der Erfindung werden hochfeste Kunststofffasern eingesetzt, beispielsweise solche aus Hochmodul-Polyethylen, wie sie unter dem Markennamen "Spectra" bekannt sind, oder Fasern aus Polyparaphenylenterephtalamid, die unter dem Markennamen "Kevlar" kommerziell erhältlich sind und die den Bau von lösbaren Haltevorrichtungen mit geringen Abmessungen ermöglichen, die dennoch für hohe Belastungen geeignet sind.

Nachfolgend soll die Erfindung anhand von in der Zeichnung dargestellten Ausführungsbeispielen näher erläutert werden. Es zeigen
- Fig. 1: eine, eine das grundlegende Funktionsprinzip darstellende, jedoch nicht erfindungsgemäße Haltevorrichtung in geschlossenem Zustand,
- Fig. 2: die Haltevorrichtung gemäß Fig. 1 in geöffnetem Zustand,
- Fig. 3: ein Gehäuse mit einer erfindungsgemäßen Haltevorrichtung und
- Fig. 4: das Gehäuse gemäß Fig. 3 in geöffnetem Zustand.

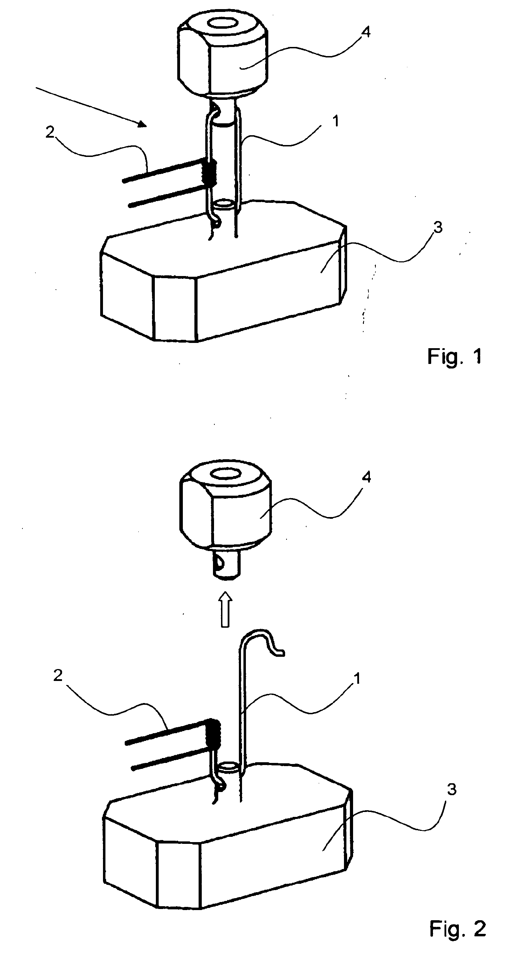

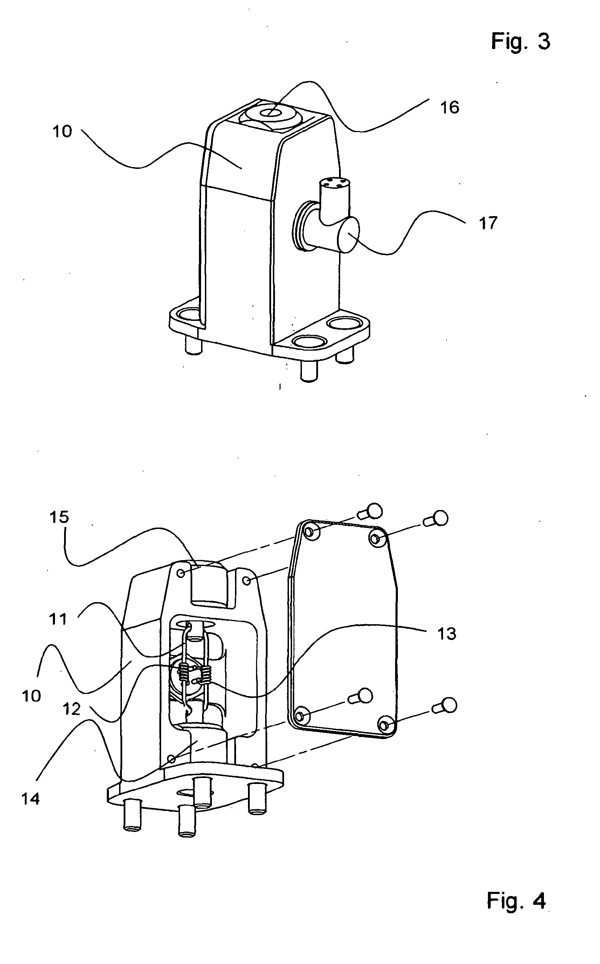

Das grundlegende Funktionsprinzip der Haltevorrichtung ist in den Figuren 1 und 2 dargestellt, während die Figuren 3 und 4 eine praktische Ausführungsform zeigen. Gemäß Fig. 1 überträgt ein Faden 1, der mit einer Heizvorrichtung 2 versehen ist, Lasten in Form von Zugspannungen zwischen einer ersten Struktur 3 und einer zweiten Struktur 4. Nach dem Aktivieren der Heizvorrichtung 2 wird der Faden 1 durch die eingebrachte Wärmezufuhr zerstört und die beiden Bauteile 3 und 4 werden freigegeben und voneinander getrennt.

Bei der in den Figuren 3 und 4 dargestellten praktischen Ausführungsform ist die Haltevorrichtung in einem Gehäuse 10 angeordnet, das mittels Schrauben an einem ersten, in der Figur nicht dargestellten Bauteil befestigbar ist, in dem auch eine Stromversorgung untergebracht ist, die die für die Trennung erforderliche Wärmeenergie liefert. Ein Faden 11 aus einem hochfestem Material verbindet zwei Gleitsteine 14 und 15. Bei der Montage wird der Faden 11 durch jeweils in den Gleitsteinen 14, 15 vorgesehene Ösen gezogen und zu einer Schlaufe verknotet. Der Knoten wird in der Öse des am Gehäuse 10 verbleibenden Gleitsteins 14 verklebt. Das abzutrennende, ebenfalls in der Figur nicht dargestellte Bauteil wird über ein im zweiten Gleitstein 15 vorgesehenes Gewinde 16 angeschraubt. Die beiden Stränge des Fadens 11 sind mit zwei unabhängig voneinander arbeitenden Heizvorrichtungen 12, 13 verbunden, die an einen elektrischen Stecker 17 angeschlossen sind.

Wird an eine der Heizvorrichtungen 12, 13 eine Spannung gelegt, so schmilzt der Faden 11 durch. Für einen Faden aus dem Werkstoff "Spectra" mit einer Stärke von 0,1 Millimetern sind dabei typischerweise etwa 10 Watt über einen Zeitraum von weniger als einer Sekunde zum Durchschmelzen erforderlich. Dadurch wird der zweite Gleitstein 15 zusammen mit dem abzutrennenden Bauteil freigegeben und kann aus dem Gehäuse 10 gleiten. Der Faden 11 rutscht dabei durch die Öse und verbleibt, da mit diesem verklebt, an dem mit dem Gehäuse 10 verbundenen ersten Gleitstein 14.

Sollte die erste Heizvorrichtung 12 versagen, so kann die zweite Heizvorrichtung 13 aktiviert werden, wodurch die analogen Vorgänge ablaufen. Werden beide Heizvorrichtungen 12 und 13 gleichzeitig aktiviert, so ist eine sehr schnelle, redundante Trennung möglich, wobei allerdings möglicherweise ein kleines Stück des Fadens 11 freigesetzt werden kann.

Vorsprünge im Inneren des Gehäuses 10 verhindern, daß die Gleitsteine 14 und 15 zusammentreffen können, wenn die Vorrichtung noch nicht eingebaut ist, und dabei die Heizvorrichtungen 12, 13 zerstören. Deshalb sind keine besonderen Vorsichtsmaßnahmen bei der Lagerung und Handhabung der Vorrichtung erforderlich.

Der im Gehäuse 10 verbleibende Gleitstein 14 ist mit einer Spannschraube versehen, über die der Faden nach der Montage gespannt wird, so daß die Vorrichtung kein Spiel aufweist und bei oszillierenden Belastungen kein Spalt zwischen dem abzutrennenden Bauteil und der Vorrichtung entstehen kann.

Die maximal mit der hier beschriebenen Vorrichtung zu halternde Last bestimmt die Größe der in den Gleitsteinen 14 und 15 vorzusehenden Gewinde und damit die Größe der Vorrichtung. Bedingt durch die hohe Bruchfestigkeit der verwendeten Fasern, bei der Faser "Spectra" beträgt beispielsweise die Bruchfestigkeit σ _{Bruch} ~ 2700 MPa, ist der Durchmesser des Fadens 11 von untergeordneter Bedeutung für die Baugröße der Vorrichtung. Bei der Verwendung eines M4-Gewindeanschlusses bzw. eines 0,1 mm starken "Spectra"-Fadens ist eine maximale Belastung von bis zu ca. 2000 N möglich, und das Gehäuse weist dann eine Größe von ca. 60 x 30 x 40 Millimetern auf.

Wird ein Faden 11 aus dem Material "Spectra" verwendet, dann bewirken die Heizvorrichtungen 12 und 13 ein Durchschmelzen des Fadens, ohne daß sich das Fadenmaterial chemisch verändert, so daß weder Gase noch Schmutzteile frei werden. Da die Vorrichtung keine explosiven Stoffe nutzt und brennbare Materialien nicht frei liegen, kann diese Vorrichtung somit auch in einem Bereich eingesetzt werden, der den Astronauten zugänglich ist.

Bei einem Polyparaphenylenterephtalamid-Material wie beispielsweise "Kevlar" bewirken die Heizvorrichtungen 12 und 13 kein Durchschmelzen, sondern es erfolgt eine Zersetzung des Materials. Hierzu sind höhere Temperaturen und damit eine größere Heizleistung erforderlich. Die Wirkung der Heizvorrichtungen kann dabei durch das Auftragen eines Oxidationsmittels auf den Faden 11 unterstützt werden. Eine derartige Ausführungsform verträgt im Betrieb höhere Temperaturen, weist allerdings den Nachteil auf, daß bei der Aktivierung der Heizvorrichtungen in geringem Maße Oxidationsprodukte, z.B. C0₂, freigesetzt werden können.

## Patentansprüche

1. Vorrichtung zur lösbaren Halterung von zwei Bauteilen in Form struktureller Elemente für einen Raumfahrteinsatz, mit wenigstens einem die Bauteile verbindenden Halteelement in Form eines, eine geschlossene Schlaufe bildenden, Fadens (11), wenigstens einer elektrischen Heizvorrichtung (12, 13) und einem, mit einem ersten der Bauteile verbundenen, Gehäuse (10), wobei der Faden (11), zur Lösung der Bauteile, mittels Wärmezufuhr zerstörbar ist und
die Zerstörung des Fadens (11) anhand der, die Wärmezufuhr bereitstellenden, wenigstens einen elektrischen Heizvorrichtung (12, 13) durchgeführt wird,
**dadurch gekennzeichnet,**
**daß** die Vorrichtung zwei Gleitsteine (14, 15) aufweist in denen jeweils eine Öse vorgesehen ist, wobei ein Gleitstein (14) nach Lösung der Bauteile am Gehäuse (10) verbleibt und der andere Gleitstein (15) mit dem zweiten, abzulösenden Bauteil verbunden ist,
**daß** der Faden (11) aus einem hochfesten Material besteht und,
zur Verbindung der Gleitsteine (14, 15), durch die jeweils in den Gleitsteinen (14, 15) vorgesehenen Ösen gezogen und zu der geschlossenen Schlaufe verknotet ist, wobei der Knoten in der Öse des, nach Lösung der Bauteile, am Gehäuse (10) verbleibenden Gleitsteins (14) verklebt ist,
und **daß** zwei der elektrischen Heizvorrichtungen (12, 13) vorgesehen sind, wobei diese unabhängig voneinander arbeiten und derart angeordnet sind, daß sie auf jeweils einen Strang der von dem Faden (11) gebildeten Schlaufe einwirken können.

2. Vorrichtung nach Anspruch 1, **dadurch gekennzeichnet, daß** der Faden (11) durch Zersetzen des Fadenmaterials zerstörbar ist.

3. Vorrichtung nach einem der Ansprüche 1 oder 2, **dadurch gekennzeichnet, daß** die Zerstörung des Fadens (n) durch ein Oxidationsmittel unterstützbar ist.

4. Vorrichtung nach einem der Ansprüche 1 bis 3, **dadurch gekennzeichnet, daß** der Faden (11) einstellbar vorgespannt werden kann.

5. Vorrichtung nach einem der Ansprüche 1 bis 4, **dadurch gekennzeichnet, daß** der Faden (11) aus dem Gehäuse (10) herausgeführt ist.

6. Vorrichtung nach einem der Ansprüche 1 bis 5, **dadurch gekennzeichnet, daß** der Faden (11) aus Fasern eines synthetisch hergestellten Werkstoffes besteht.

## Claims

1. A device for the releasable retention of two components in the form of structural elements for space flight deployment, with at least one retaining element connecting the components in the form of a thread (11) forming a closed loop, at least one electrical heating device (12, 13) and a housing (10) connected with a first of the components, wherein
the thread (11), for purposes of releasing the components, can be destroyed by means of a supply of heat, and the destruction of the thread (11) is executed by means of at least one electrical heating device (12, 13) providing the supply of heat,
**characterised in that**,
the device has two sliding blocks (14, 15), in each of which an eye is provided, wherein
after the release of the components one sliding block (14) remains on the housing (10), and the other sliding block (15) is connected with the second component that is to be released,
**in that**,
the thread (11) consists of a high-strength material and, for purposes of connecting the sliding blocks (14, 15) is pulled through the eyes provided in each of the sliding blocks (14, 15) and is knotted to form the closed loop, wherein
the knot is bonded in the eye of the sliding block (14) remaining on the housing (10) after the release of the components,
and **in that**,
two of the electrical heating devices (12, 13) are provided, wherein
these operate independently of one another, and are arranged such that each can act on one strand of the loop formed by the thread (11).

2. The device in accordance with Claim 1,
**characterised in that**,
the thread (11) can be destroyed by decomposition of the thread material.

3. The device in accordance with one of the Claims 1 or 2,
**characterised in that**,
the destruction of the thread (11) can be aided by means of an oxidant.

4. The device in accordance with one of the Claims 1 to 3,
**characterised in that**,
the thread (11) can be pre-tensioned in an adjustable manner.

5. The device in accordance with one of the Claims 1 to 4,
**characterised in that**,
the thread (11) is led out of the housing (10).

6. The device in accordance with one of the Claims 1 to 5,
**characterised in that**,
the thread (11) consists of fibres of a synthetically manufactured material.

## Revendications

1. Dispositif destiné à la fixation séparable de deux pièces ayant la forme d'éléments structuraux pour une utilisation spatiale, comprenant au moins un élément de fixation reliant les pièces ayant la forme d'un fil (11) et formant une boucle fermée, au moins un dispositif de chauffage électrique (12, 13) et un premier boîtier (10) relié aux pièces, sachant que le fil (11), pour séparer les pièces peut être détruit par apport de chaleur et la destruction du fil (11) est effectuée à l'aide de l'au moins un dispositif de chauffage électrique (12, 13) fournissant l'apport de chaleur,
**caractérisé en ce que**
le dispositif présente deux coulisseaux (14, 15) dans lesquels un oeillet est respectivement prévu, sachant qu'un coulisseau (14) reste sur le boîtier (10) après la séparation des pièces et l'autre coulisseau (15) est relié à la seconde pièce à séparer,
que le fil (11) est en matériau haute résistance et, pour relier les coulisseaux (14, 15), est tiré à travers les oeillets prévus respectivement dans les coulisseaux (14, 15) et est noué en la boucle fermée, sachant que le noeud dans l'oeillet du coulisseau (14) restant sur le boîtier (10) après la séparation est collé, et que deux des dispositifs de chauffage électrique (12, 13) sont prévus, sachant que ceux-ci fonctionnement indépendamment l'un de l'autre et sont disposés de telle sorte qu'ils peuvent agir sur un écheveau respectif de la boucle formée par le fil (11).

2. Dispositif selon la revendication 1, **caractérisé en ce que** le fil (11) peut être détruit par désagrégation du matériau du fil.

3. Dispositif selon la revendication 1 ou 2, **caractérisé en ce que** la destruction du fil (11) peut être favorisée par un oxydant.

4. Dispositif selon l'une des revendications 1 à 3, **caractérisé en ce que** le fil (11) peut être précontraint de façon réglable.

5. Dispositif selon l'une des revendications 1 à 4, **caractérisé en ce que** le fil (11) est dirigé hors du boîtier (10).

6. Dispositif selon l'une des revendications 1 à 5, **caractérisé en ce que** le fil (11) est composé de fibres d'un matériau synthétique.
